# EUROPÄISCHE PATENTSCHRIFT

(11) **EP 3 795 543 B1**
(45) Veröffentlichungstag und Bekanntmachung des Hinweises auf die Patenterteilung: **19.03.2025**
(21) Anmeldenummer: 20196195.0
(22) Anmeldetag: 15.09.2020
(51) Int. Cl.: C02F 11/121, C02F 11/145, C02F 11/147, C02F 11/15, C02F 1/36, C02F 1/52, C02F 1/56

(54) **VERFAHREN ZUR OPTIMIERUNG DER ENTWÄSSERUNG VON MIKROORGANISMEN AUFWEISENDEM SCHLAMM**
METHOD FOR OPTIMIZING THE DEWATERING OF SLUDGE COMPRISING MICROORGANISMS
PROCÉDÉ D'OPTIMISATION DU DRAINAGE DES BOUES COMPRENANT DES MICROORGANISMES

(30) Priorität: 20.09.2019 AT 508122019
(43) Veröffentlichungstag der Anmeldung: 24.03.2021
(73) Patentinhaber: Kubinger, Ulrich, 4675 Weibern (AT)
(72) Erfinder: Kubinger, Ulrich, 4675 Weibern (AT)
(74) Vertreter: Hübscher & Partner Patentanwälte GmbH

(56) Entgegenhaltungen:
- EP-A1- 3 539 932
- CN-A- 106 430 878
- CN-A- 108 275 853
- HUAN L ET AL: "Effects of ultrasonic disintegration on sludge microbial activity and dewaterability", JOURNAL OF HAZARDOUS MATERIALS, ELSEVIER, AMSTERDAM, NL, vol. 161, no. 2-3, 30 January 2009 (2009-01-30), pages 1421 - 1426, XP025681983, ISSN: 0304-3894, [retrieved on 20080503], DOI: 10.1016/J.JHAZMAT.2008.04.113

## Beschreibung

Die Erfindung bezieht sich auf ein Verfahren zur Optimierung der Entwässerung von Mikroorganismen aufweisendem Schlamm aus einem biologischen Reinigungsprozess, insbesondere aus der Abwasseraufbereitung, welcher einer Entwässerungsvorrichtung zugeführt wird.

In der Abwasserreinigung werden Belebungsverfahren eingesetzt, in denen Mikroorganismen beispielsweise zum Abbau von organischen Kohlenstoff- und Stickstoffverbindungen, zur Entfernung von Phosphaten und daher generell zur Reinigung von verschmutztem Wasser verwendet werden. Neben dieser biologischen Reinigung kommen auch chemische Reinigungsstufen zum Einsatz, um das Abwasser von Phosphor oder anderen problematischen Stoffen wie Schwermetallen zu befreien.

Grundsätzlich fallen dabei große Massen an Schlamm an, dessen Volumen und Masse zur Weiterverwertung bzw. zur Versorgung reduziert werden soll.

Aus der WO2009065509 ist hierzu ein Verfahren zur Optimierung der Entwässerung von biogenem Schlamm vorbekannt, bei dem der Schlamm zur Desintegration, also zur Zerstörung der Mikroorganismen in einem ersten Verfahrensschritt mit Ultraschall behandelt wird, wonach der Schlamm in einem zweiten Verfahrensschritt mit Flockungshilfsmittel, das Polymere enthält, versetzt wird. Anschließend kann der Schlamm mit Hilfe einer Filterpresse entwässert werden. Nachteilig daran ist allerdings, dass Abwässer und die daraus entstehenden Schlämme stark variieren können, weshalb bisher bekannte Optimierungsverfahren zu Schlämmen mit stark unterschiedlichem Restwassergehalt führen. Diese fehlende Reproduzierbarkeit wirkt sich problematisch auf die Logistik und die allgemeine Vorausplanung bei der Entsorgung der Schlämme aus. Bisher kann nur durch eine permanente manuelle Nachjustierung beispielsweise der Abwasserdurchflussmenge, der Aggregatleistung und der Fällungsmittelmenge ein annähernd konstantes bzw. kontinuierliches Ergebnis erreicht werden.

In der EP3539932 A1 ist ein Verfahren zur Optimierung der Entwässerung von Schlamm aus einem biologischen Reinigungsprozess beschrieben, wobei der Schlamm mit Ultraschall beschallt wird und wovor, wobei und/oder wonach dem Schlamm ein Konditionierungsmittel zudosiert wird.

Der Erfindung liegt somit die Aufgabe zugrunde, ein ressourcenschonendes Verfahren zur Entwässerung von Schlamm und eine Vorrichtung zur Durchführung des Verfahrens vorzuschlagen, das unabhängig von der Beschaffenheit des Ausgangsschlammes eine verbesserte und vor allem reprozierbare Entwässerung des Schlammes ermöglicht.

Die Erfindung löst die gestellte Aufgabe durch das im Anspruch 1 definierte Verfahren.

Das Schlammvorkonditionierungsmittel, eine Lösung aus Calziumsalz, Zitronensäure und Eisendichlorid, wird zur Vorkonditionierung des Schlammes eingesetzt. Vorkonditionierung bedeutet in diesem Zusammenhang, dass die Oberfläche des Schlammes für einen späteren Ladungsausgleich mit einem Flockungshilfsmittel vorbereitet wird. Dabei hat sich herausgestellt, dass eine besonders gute Vorkonditionierung hinsichtlich der Schlammflockenstruktur und Schlammflockenstabilität erreicht wird, wenn der Schlamm während oder nach der Zugabe des Schlammvorkonditionierungsmittels mit Ultraschall beschallt wird.

Erfindungsgemäß werden die Parameter des Ultraschalls, wie Frequenz und Leistung, so gewählt, dass die Mikroorganismen nicht zerstört werden. Der Ultraschall wird demnach nicht zur Desintegration der Mikroorganismen, sondern zur Vorkonditionierung des Schlammes eingesetzt, wobei die Wirkung des Ultraschalls durch das Schlammvorkonditionierungsmittel verstärkt wird. Überraschenderweise wird nämlich durch die Kombination aus zellzerstörungsfreier Ultraschallbehandlung und der Zugabe des Schlammvorkonditionierungsmittels ein stark verbesserter Ladungsausgleich zwischen den Schlammflocken und dem im letzten Schritt hinzugefügten, Polymere aufweisenden Flockungshilfsmittel erreicht, wodurch die benötigte Zugabemenge des Flockungshilfsmittels deutlich reduziert werden kann. Durch die effiziente Vorkonditionierung des Schlammes kann unabhängig von der Beschaffenheit des Ausgangsschlammes ein annähernd konstanter Ladungsausgleich zwischen Schlammflocken und dem Flockungshilfsmittel erzielt werden, wodurch einerseits das Entwässerungsergebnis reproduzierbar bleibt und andererseits im Vergleich zu bisher bekannten Methoden verbessert wird. Üblicherweise steigen die Entsorgungskosten von Schlämmen, die beispielsweise in Verbrennungsanlagen verfeuert werden, mit ihrer Masse. Durch die Reduktion des Wasseranteils können demnach sowohl die Transportkosten, als auch die Kosten für die Verbrennung vermindert werden. Zudem kommt der Vorteil, dass das Verfahren aufgrund der geringeren benötigten Menge an Flockungshilfsmittel günstiger ist. Es braucht wohl nicht weiter erwähnt werden, dass nach Zugabe des Flockungshilfsmittels der erfindungsgemäß behandelte Schlamm einer aus dem Stand der Technik bekannten Entwässerungsvorrichtung, wie beispielsweise einer Schneckenpresse oder Zentrifuge, zugeführt werden muss.

Eine besonders effiziente Behandlung des Schlammes ohne dabei die Mikroorganismen zu schädigen ergibt sich, wenn der Schlamm mit einer Frequenz als Parameter des Ultraschalls zwischen 20 und 100kHz, insbesondere mit einer Frequenz von 25kHz, beschallt wird.

Um dauerhaft eine reproduzierbare Entwässerung des Schlammes zu erreichen, ohne dabei die Betriebskosten signifikant zu erhöhen, wird der Schlamm mit einer spezifischen Leistung von 5 bis 50 W/kg im Schlamm enthaltenem Feststoff beschallt.

Der zu entwässernde Schlamm kann im Voll- oder Teilstrom behandelt werden. Durch die erfindungsgemäßen Maßnahmen können trotz variierender Rahmenbedingungen, beispielsweise unterschiedliche Jahreszeiten, annähernd gleichbleibende Bedingungen für die Entwässerung geschaffen werden. Darüber hinaus werden durch die gleichbleibenden Bedingungen die Justierungsintervalle, zum Feinjustieren der Parameter des Ultraschalls, der Zugabemenge des Schlammvorkonditionierungsmittels und des Flockungshilfsmittels deutlich vergrößert. Das Verfahren wird demnach deutlich wartungsärmer und betriebssicherer. Mit der vorgeschlagenen Optimierung kann das Entwässerungsergebnis von beispielsweise Klärschlamm um bis zu 20% verbessert werden.

Das erfindungsgemäße Verfahren kann durchgeführt werden in einer Vorrichtung mit einer zwischen einer Ultraschallanlage und einer Entwässerungsvorrichtung angeordneten Flockungshilfsmitteldosiereinrichtung wobei der Ultraschallanlage eine Schlammvorkonditionierungsmitteldosiereinrichtung zu- und/oder vorgeordnet ist.

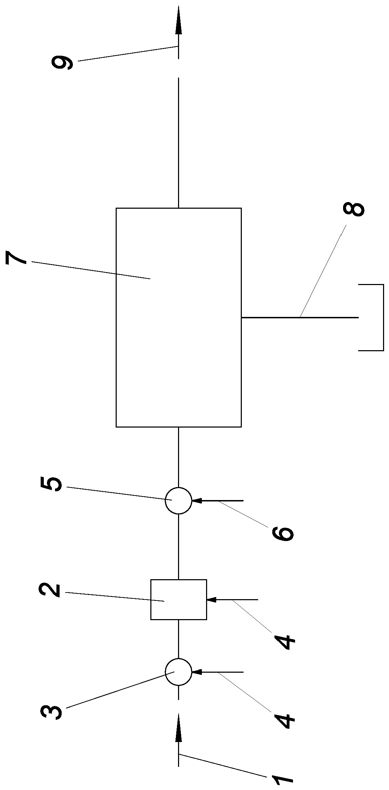

In der Zeichnung ist ein Beispiel einer Vorrichtung zur Durchführung des erfindungsemäßen Verfahrens dargestellt.

Eine Vorrichtung zur Entwässerung von Mikroorganismen aufweisendem Schlamm 1 aus einem biologischen Reinigungsprozess umfasst eine einer Ultraschallanlage 2 vorgelagerte Schlammvorkonditionierungsmitteldosiereinrichtung 3 zur Zudosierung eines Schlammvorkonditionierungsmittels 4. Der Ultraschallanlage 2 ist des Weiteren eine Flockungshilfsmitteldosiereinrichtung 5 nachgelagert, durch die der Schlamm 1 mit einem Flockungshilfsmittel 6 beaufschlagt werden kann, bevor der Schlamm 1 der Entwässerungsvorrichtung 7 zugeführt wird. In der Entwässerungsvorrichtung 7 wird der derart vorbehandelte Schlamm 1 entwässert und die flüssige Phase 8 von der festen Phase 9 des Schlammes 1 getrennt. Das Schlammvorkonditionierungsmittel 4 kann auch über die Ultraschallanlage 2 zudosiert werden.

## Patentansprüche

1. Verfahren zur Optimierung der Entwässerung von Mikroorganismen aufweisendem Schlamm (1) aus einem biologischen Reinigungsprozess, insbesondere aus der Abwasseraufbereitung, welcher einer Entwässerungsvorrichtung (7) zugeführt wird, **dadurch gekennzeichnet, dass** der Schlamm (1) mit einer Lösung aus Calziumsalz, Zitronensäure und Eisendichlorid als Schlammvorkonditionierungsmittel (4) versetzt wird, wonach oder wobei der Schlamm (1) mit Ultraschall beschallt wird, wobei Parameter des Ultraschalls so gewählt sind, dass Zellwände der Mikroorganismen intakt bleiben, und dass dem Schlamm (1) anschließend ein Polymere aufweisendes Flockungshilfsmittel (6) zudosiert wird, bevor dieser der Entwässerungsvorrichtung (7) zugeführt wird, wobei der Schlamm (1) mit einer spezifischen Leistung von 5 bis 50 W/kg im Schlamm (1) enthaltenem Feststoff, beschallt wird.

2. Verfahren nach Anspruch 1, **dadurch gekennzeichnet, dass** der Schlamm (1) mit einer Frequenz als Paramater des Ultraschalls zwischen 20 und 100kHz, insbesondere mit einer Frequenz von 25kHz, beschallt wird.

## Claims

1. Method for optimising the dewatering of sludge (1) containing microorganisms from a biological purification process, in particular from waste water treatment, which sludge (1) is fed to a dewatering device (7), **characterised in that** a solution of calcium salt, citric acid and iron dichloride is added to the sludge (1) as a sludge preconditioning agent (4), after which or wherein the sludge (1) is sonicated with ultrasound, the parameters of the ultrasound being selected such that cell walls of the microorganisms remain intact, and **in that** a flocculant (6) comprising polymers is then added to the sludge (1) before the latter is fed to the dewatering device (7), wherein the sludge (1) is sonicated with a specific power of 5 to 50 W/kg of solids contained in the sludge (1).

2. Method according to claim 1, **characterised in that** the sludge (1) is sonicated with a frequency as a parameter of the ultrasound between 20 and 100 kHz, in particular with a frequency of 25 kHz.

## Revendications

1. Procédé destiné à optimiser le drainage de boues comprenant des microorganismes (1) à partir d'un processus de bionettoyage, en particulier à partir du traitement des eaux usées, lesquelles sont introduites dans un dispositif de drainage (7), **caractérisé en ce que** les boues (1) sont déposées avec une solution de sel de calcium, d'acide citrique et de chlorure de fer sous forme de moyen de préconditionnement de boues (4), après quoi ou dans lequel les boues (1) sont traitées par ultrasons, dans lequel les paramètres des ultrasons sont choisis de telle sorte que les parois cellulaires des microorganismes restent intacts et **en ce qu'**un moyen de floculation (6) comprenant des polymères est ajouté ensuite aux boues (1), avant que celles-ci soient introduites dans le dispositif de drainage (7), les boues (1) étant traitées par ultrasons à une puissance spécifique de 5 à 50 W/kg dans la matière solide contenant les boues (1).

2. Procédé selon la revendication 1, **caractérisé en ce que** les boues (1) sont traitées par ultrasons à une fréquence servant de paramètre des ultrasons comprise entre 20 et 100 kHz, en particulier à une fréquence de 25 kHz.
